# EUROPÄISCHE PATENTANMELDUNG

(11) **EP 0 591 660 A1**
(43) Veröffentlichungstag der Anmeldung: **13.04.1994**
(21) Anmeldenummer: 93113259.1
(22) Anmeldetag: 19.08.1993
(51) Int. Cl.: B08B 3/02, F23N 5/24, B05B 9/00

(54) **Hochdruckreinigungsgerät**

(30) Priorität: 06.10.1992 DE 4233538
(71) Anmelder: Alfred Kärcher GmbH & Co., D-71364 Winnenden (DE)
(72) Erfinder: Nathan, Robert, D-71522 Backnang (DE)
(74) Vertreter: Hoeger, Stellrecht & Partner

(57) **Zusammenfassung**

Bei einem Hochdruckreinigungsgerät mit einer eine Reinigungsflüssigkeit aus einer Saugleitung in eine Druckleitung pumpenden Hochdruckpumpe, mit einer Drosselstelle (4) in der Druckleitung, an der ein strömungsabhängiger Druckabfall auftritt, mit einem in einem Gehäuse abgedichtet verschiebbaren Steuerkolben (11), der dieses in zwei Kammern (14,15) unterteilt, von denen eine (14) mit der Druckleitung stromaufwärts der Drosselstelle (14) verbunden ist und die andere mit der Druckleitung an der Drosselstelle oder stromabwärts derselben, mit einem Ventil (62), das durch die Bewegung des Steuerkolbens geöffnet und geschlossen wird, und mit einer Heizung für die über die Druckleitung abgegebene Flüssigkeit, eine strömungsabhängige Steuerung der Heizung der Reinigungsflüssigkeit zu erreichen, wird vorgeschlagen, daß das Ventil (62) ein Dosierventil ist, welches eine zu einem Brenner der Heizung führende Zufuhrleitung für einen fossilen Brennstoff mit einer von der Zufuhrleitung zum Brennstoffvorrat (23) zurückführenden Bypass-Leitung (22) verbindet und die Verbindung verschließt, wenn aufgrund einer Strömung in der Druckleitung eine große Druckdifferenz an der Drosselstelle entsteht, sie jedoch bei fallender Druckdifferenz an der Drosselstelle (4) aufgrund abnehmender Strömung in der Druckleitung zunehmend freigibt.

## Beschreibung

Die Erfindung betrifft ein Hochdruckreinigungsgerät mit einer eine Reinigungsflüssigkeit aus einer Saugleitung in eine Druckleitung pumpenden Hochdruckpumpe, mit einer Drosselstelle in der Druckleitung, an der ein strömungsabhängiger Druckabfall auftritt, mit einem in einem Gehäuse abgedichtet verschiebbaren Steuerkolben, der dieses in zwei Kammern unterteilt, von denen eine mit der Druckleitung stromaufwärts der Drosselstelle verbunden ist und die andere mit der Druckleitung an der Drosselstelle oder stromabwärts derselben, mit einem Ventil, das durch die Bewegung des Steuerkolbens geöffnet und geschlossen wird, und mit einer Heizung für die über die Druckleitung abgegebene Flüssigkeit.

Derartige Hochdruckreinigungsgeräte, werden üblicherweise so eingesetzt, daß der Steuerkolben ein Ventil in einer Bypass-Leitung für die abgegebene Flüssigkeit öffnet oder schließt, so daß bei Querschnittsveränderungen in der Druckleitung ein Teil der von der Pumpe geförderten Flüssigkeit über die Bypass-Leitung zu der Saugseite der Hochdruckpumpe zurückgeführt wird.

Bei derartigen Pumpen und bei anderen Hochdruckreinigungspumpen, bei denen die Flüssigkeit über einen mit fossilem Brennstoff beheizten Brenner aufgeheizt wird, besteht die Gefahr, daß die abgegebene Flüssigkeit zu stark aufgeheizt wird, beispielsweise bei dem beschriebenen Bypass-Betrieb, bei dem die Flüssigkeit zumindest teilweise im Kreislauf geführt wird.

Es ist Aufgabe der Erfindung, bei gattungsgemäßen Hochdruckreinigungsgeräten sicherzustellen, daß die Brennerleistung an die abgegebene Reinigungsflüssigkeitsmenge angepaßt wird, ohne daß dazu komplizierte elektronische Steuerungseinrichtungen notwendig sind.

Diese Aufgabe wird bei einem Hochdruckreinigungsgerät der eingangs beschriebenen Art erfindungsgemäß dadurch gelöst, daß das Ventil ein Dosierventil ist, welches eine zu einem Brenner der Heizung führende Zufuhrleitung für einen fossilen Brennstoff mit einer von der Zufuhrleitung zum Brennstoffvorrat zurückführenden Bypass-Leitung verbindet und die Verbindung verschließt, wenn aufgrund einer Strömung in der Druckleitung eine große Druckdifferenz an der Drosselstelle entsteht, sie jedoch bei fallender Druckdifferenz an der Drosselstelle aufgrund abnehmender Strömung in der Druckleitung zunehmend freigibt.

Es wird also im Gegensatz zu bekannten Hochdruckreinigungsgeräten mit dem Steuerkolben ein Ventil einer Bypass-Leitung im Fördersystem des fossilen Brennstoffs betätigt. Dieses Ventil öffnet und verschließt die Bypass-Leitung im Brennstoffzufuhrsystem entsprechend der Durchflußmenge der Reinigungsflüssigkeit im Pumpensystem, wobei diese Steuerung in einfacher Weise eine mechanische Steuerung ist, die ähnlich funktioniert, wie die bekannten Steuerungen in der Bypass-Leitung des Fördersystems für die Flüssigkeit. Dieser Steuerkolben kann im übrigen unter Umständen gleichzeitig auch in herkömmlicher Weise ein Öffnungsventil in der Bypass-Leitung des Reinigungsflüssigkeitssystems betätigen.

Wesentlich ist jedoch, daß auch für das Fördersystem für den fossilen Brennstoff eine Bypass-Leitung vorgesehen ist, die entweder in den Brennstofftank oder zur Saugseite einer Brennstoff-Förderpumpe zurückführt, und daß diese Bypass-Leitung durch das Dosierventil in Abhängigkeit von der abgegebenen Reinigungsflüssigkeitsmenge betätigt wird. Fließt eine große Flüssigkeitsmenge durch die Hochdruckpumpe und die anschließende Druckleitung, so bleibt die Bypass-Leitung des Brennstoff-Fördersystems geschlossen, der gesamte geförderte Brennstoff wird dem Brenner zugeführt. Nimmt dagegen die durch die Druckleitung geförderte Flüssigkeitsmenge ab, so wird zunächst ein Teil des geförderten Brennstoffes über die Bypass-Leitung am Brenner vorbeigeführt, der Brenner erhält eine geringere Brennstoffzufuhr. Wird die Druckleitung überhaupt nicht von einer Flüssigkeit durchströmt, gelangt der gesamte fossile Brennstoff über die Bypass-Leitung wieder in den Brennstofftank oder zur Saugseite der Brennstoff-Förderpumpe zurück, der Brenner wird dadurch ausgeschaltet.

Die gesamte Steuerung ist dabei eine rein mechanische Steuerung, wobei sich auch insgesamt eine sehr geringe Baugröße ergibt, wenn man vorzugsweise die beschriebene Steuerteile in einem gemeinsamen Gehäuse unterbringt, bei dem die Druckleitung und die Bypass-Leitung des Brennstoffsystems unmittelbar nebeneinanderliegen können.

Günstig ist es zum Beispiel, wenn der Steuerkolben abgedichtet aus dem Gehäuse austritt und außerhalb des Gehäuses einen Ventilkörper trägt, der abgedichtet in ein Ventilgehäuse eintritt, in das die Zufuhrleitung eintritt und aus dem die Bypass-Leitung austritt.

Die Zufuhrleitung kann sich dabei stufenförmig erweitern und an ihrer Erweiterungsstufe einen Ventilsitz ausbilden, gegen den der Ventilkörper des Dosierventils dichtend anlegbar beziehungsweise von dem der Ventilkörper einen Ringspalt unterschiedlicher Breite ausbildend abhebbar ist.

Es ist vorteilhaft, wenn der Steuerkolben mittels einer Feder in Richtung auf die Öffnungsstellung des Dosierventils vorgespannt ist, dadurch läßt sich der Einsatzpunkt beeinflussen, bei welchem eine erste Öffnung der Verbindung zwischen Zufuhrleitung für den fossilen Brennstoff und Bypass-Leitung eintritt.

Bei einer ersten bevorzugten Ausführungsform ist vorgesehen, daß die Drosselstelle durch eine Querschnittsverengung in der Druckleitung gebildet ist und im Bereich der Drosselstelle eine Verbindungsleitung zu der anderen Kammer des den Steuerkolben aufnehmenden Gehäuses abzweigt. An der Querschnittsverengung tritt aufgrund der höheren Strömungsgeschwindigkeit der durch die Druckleitung geführten Flüssigkeit eine Absenkung des statischen Drucks auf, so daß sich am Steuerkolben eine mit zunehmender Strömung wachsende Druckdifferenz einstellt. Diese Drosselstelle kann im übrigen gleichzeitig auch zur Ansaugung einer Reinigungschemikalie verwendet werden, in diesem Falle wird die Drosselstelle durch einen Chemie-Injektor gebildet.

Bei einer anderen Ausgestaltung ist vorgesehen, daß die Drosselstelle durch einen die Heizung durchsetzenden Teil der Druckleitung gebildet wird und stromabwärts der Heizung eine Verbindungsleitung zu der anderen Kammer des den Steuerkolben aufnehmenden Gehäuses abzweigt. Die Druckleitung im Bereich der Heizung führt aufgrund von Strömungswiderständen zu einer Abnahme des Drucks der hindurchströmenden Flüssigkeit, und diese Druckabnahme wird als Druckdifferenz zur Verschiebung des Steuerkolbens ausgenützt. Selbstverständlich könnte anstelle der Heizung auch ein anderer Verbraucher zur Erzeugung dieser Druckdifferenz verwendet werden, so daß die ohnehin vorhandene Druckdifferenz zur Bewegung des Steuerkolbens ausgenutzt wird. Es ist daher nicht notwendig, eine zusätzliche Drosselung mit unerwünschten Verlusten vorzunehmen, um den Steuerkolben zu verschieben.

Bei einer weiteren bevorzugten Ausführungsform ist vorgesehen, daß in der Druckleitung stromabwärts der Heizung ein temperaturabhängig verschiebbarer Fühler angeordnet ist, der beim Überschreiten einer oberen Grenztemperatur ein Schließventil zwischen der Zufuhrleitung zwischen dem fossilen Brennstoff und der Bypass-Leitung öffnet. Bei dieser Ausführung wird also zusätzlich eine weitere Verbindung zwischen Zufuhrleitung für den fossilen Brennstoff und Bypass-Leitung vorgesehen. Diese Verbindung wird nur dann geöffnet, wenn die Temperatur der durch die Druckleitung geförderten Flüssigkeit über einen Grenzwert angestiegen ist. Dadurch wird die Brennerleistung reduziert, oder der Brenner wird ganz abgeschaltet.

Das Schließventil kann beispielsweise als federbelastetes Rückschlagventil ausgebildet sein, wobei der Fühler das Ventil entgegen der Feder mechanisch verschiebt. Derartige Fühler sind an sich bekannt, beispielsweise können sie mit Dehnungskörpern ausgestattet sein, die ihr Volumen temperaturabhängig sehr stark verändern. Die Dehnungskörper sind beispielsweise balgenförmige Körper, die mit einem Gas gefüllt sind.

Bei einer weiteren bevorzugten Ausführungsform kann vorgesehen sein, daß zwischen der Zufuhrleitung für den fossilen Brennstoff und der Bypass-Leitung ein Ventil angeordnet ist, welches beim Überschreiten eines bestimmten oberen Grenzdruckes öffnet, darunter jedoch verschlossen ist. Damit wird sichergestellt, daß der Druck in der Brennstoffleitung einen oberen Grenzwert nicht überschreiten kann. Es handelt sich somit um ein Sicherheitsventil, dessen Öffnungspunkt gegebenenfalls durch Verstellen einer Federvorspannung einstellbar sein kann.

Weiterhin ist günstig, wenn in der Verbindungsleitung zwischen der Zufuhrleitung für den fossilen Brennstoff und dem Brenner ein federbelastetes Schließventil angeordnet ist, welches beim Überschreiten eines Mindestdrucks in der Zufuhrleitung öffnet und bei niedrigeren Druckwerten geschlossen ist. Dadurch wird sichergestellt, daß dem Brenner der fossile Brennstoff immer mit ausreichendem Druck zugeführt wird, ein Brenner benötigt einen bestimmten Mindestdruck des zugeführten Brennstoffes. Zusammen mit den beschriebenen, die Zufuhrleitung zur Bypass-Leitung hin öffnenden Ventilen führt dieses federbelastete Schließventil dazu, daß beim Absinken des Drucks in der Zufuhrleitung aufgrund einer Verbindung zur Bypass-Leitung das federbelastete Schließventil zum Brenner schließt, so daß der Brenner immer dann ausgeschaltet wird, wenn in der Zufuhrleitung durch die Verbindung zur Bypass-Leitung ein relativ starker Druckabfall auftritt. Nur im Bereich oberhalb des Schließdrucks des zum Brenner führenden Schließventils erfolgt daher beim Herstellen einer Verbindung zur Bypass-Leitung eine Leistungsminderung des Brenners, unterhalb des Schließdrucks des Schließventils wird dagegen der Brenner ganz ausgeschaltet. Der Brennstoff wird in dem zuletzt genannten Fall dann vollständig über die Bypass-Leitung zu dem Brennstofftank zurückgeführt.

Auch hier ist es günstig, wenn die Federvorspannung des zum Brenner führenden Schließventils einstellbar ist.

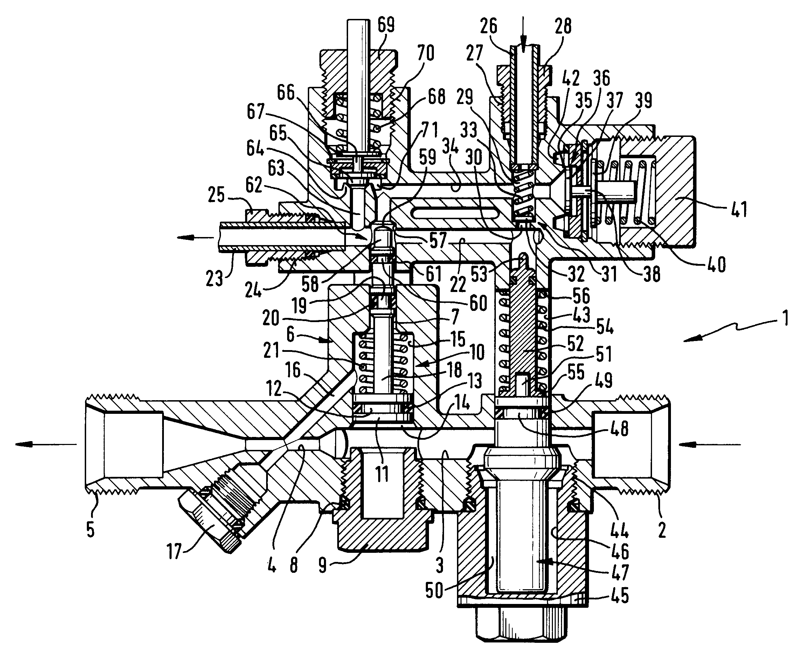

Die nachfolgende Beschreibung einer bevorzugten Ausführungsform der Erfindung dient im Zusammenhang mit der Zeichnung der näheren Erläuterung. Die Zeichnung zeigt eine Längsschnittansicht durch einen Verteilerkopf eines Hochdruckreinigungsgeräts.

Das im folgenden als Verteiler 1 bezeichnete Bauteil wird in einem Hochdruckreinigungsgerät an dem druckseitigen Auslaß einer in der Zeichnung nicht dargestellten Hochdruckpumpe angeschlossen, dieser Anschluß wird beispielsweise über ein Außengewinde 2 des Verteilers 1 vorgenommen, wodurch eine den Verteiler 1 durchsetzende Druckleitung 3 mit dem druckseitigen Auslaß der Hochdruckpumpe verbunden wird. Diese Druckleitung 3 verengt sich im Bereich einer Drosselstelle 4, stromabwärts der Drosselstelle 4 weitet sie sich wieder auf. In diesem Bereich kann über ein Außengewinde 5 eine weiterführende Druckleitung angeschlossen werden, beispielsweise ein flexibler Hochdruckschlauch, der zu einer Sprühlanze des Hochdruckreinigungsgerätes führt.

Der Verteiler 1 weist unmittelbar stromaufwärts der Drosselstelle 4 einen zylinderförmigen, seitlichen Vorsprung 6 auf, in dem sich eine die Druckleitung quer durchsetzende, sich stufig verengende Durchgangsbohrung 7 befindet. Auf der dem Vorsprung 6 abgewandten Seite ist diese Durchgangsbohrung 7 durch einen eingeschraubten und mit einer Dichtung 8 versehenen Stopfen 9 verschlossen, der erweiterte Bereich der Durchgangsbohrung 7, der sich im Inneren des Vorsprungs 6 befindet, bildet ein Gehäuse 10 aus, welches zur Druckleitung 3 hin offen ist. In diesem Gehäuse 10 ist ein Steuerkolben 11 quer zur Durchgangsbohrung 7 verschieblich gelagert, der durch eine in einer Umfangsnut 12 eingelegte Ringdichtung 13 gegenüber der Innenwand des Gehäuses 10 abgedichtet ist und dieses in zwei Kammern unterteilt, nämlich eine erste, mit der Druckleitung 3 in Verbindung stehende Kammer 14 und in eine zweite Kammer 15, die über eine schräg verlaufende Bohrung 16 mit der Drosselstelle 4 in Verbindung steht. Die Bohrung 16 durchsetzt dabei die Druckleitung 3 im Bereich der Drosselstelle 4 und erweitert sich am unteren Ende des Verteilers 1. In diesem Bereich ist die Bohrung 16 durch einen abgedichtet eingeschraubten Stopfen 17 verschlossen. In diesem Bereich könnte anstelle des Stopfens 17 eine Chemikalienansaugleitung angeschlossen werden, durch die im Bereich der Drosselstelle 4 Reinigungschemikalie angesaugt wird. Die Drosselstelle 4 würde dann als Chemikalien-Injektor wirken. Im dargestellten Ausführungsbeispiel jedoch fehlt ein solcher Chemikalien-Injektor, da die Bohrung 16 durch den Stopfen 17 abgeschlossen ist.

Der Steuerkolben 11 trägt an seiner der Druckleitung 3 abgewandten Seite eine Kolbenstange 18, die durch den verengten Teil der Durchgangsbohrung 7 hindurchtritt und dort das Gehäuse 10 verläßt. Im verengten Bereich der Durchgangsbohrung 7 ist die Kolbenstange 18 durch eine in eine Umfangsnut 19 eingelegte Ringdichtung 20 gegenüber der Durchgangsbohrung 7 abgedichtet.

Im Inneren des Gehäuses 10 ist eine die Kolbenstange 18 konzentrisch umgebende Schraubenfeder 21 angeordnet, die sich einerseits am Steuerkolben 11 und andererseits am Boden des Gehäuses 10 abstützt und somit bestrebt ist, den Steuerkolben 11 in Richtung auf die Druckleitung 3 zu verschieben.

Der Verteiler 1 weist parallel zu dem die Druckleitung 3 umgebenden Gehäuseteil einen weiteren Gehäuseteil auf, in dem sich eine parallel zur Druckleitung 3 verlaufende Bypass-Leitung 22 befindet. Diese beginnt im Inneren des Verteilers 1 und mündet in ein Leitungsstück 23 ein, welches mittels eines in eine Gewindebohrung 24 des Verteilers 1 eingeschraubten Gewindestopfens 25 gegenüber dem Verteiler 1 abgedichtet in diesem festgelegt ist. Das Leitungsstück 23 führt in aus der Zeichnung nicht ersichtlicher Weise in einen Vorratstank für fossilen Brennstoff, beispielsweise Heizöl, oder zur Ansaugseite einer Brennstoffpumpe, die fossilen Brennstoff einem Brenner zuführt. Die von der Druckseite dieser Brennstoffpumpe herkommende Zufuhrleitung für den fossilen Brennstoff endet in einem Leitungsstück 26, das im Bereich des Beginns der Bypass-Leitung 22 senkrecht zu dieser in den Verteiler 1 eingesetzt ist und dabei in gleicher Weise wie das Leitungsstück 23 im Verteiler 1 über einen in eine Gewindebohrung 27 eingeschraubten Gewindestopfen 28 abgedichtet gehalten ist. Im Verteiler 1 ist eine an das Leitungsstück 26 anschließende Bohrung 29 angeordnet, die sich stufig verengend in den Beginn der Bypass-Leitung 22 einmündet. An der stufigen Verengung 30 ist ein Rückschlagventil 31 angeordnet, welches aus einem plattenförmig auf die Verengung 30 aufgelegten Ventilkörper 32 besteht, der durch eine an der Bohrung 29 angeordnete Schraubenfeder 33 gegen die Verengung 30 gedrückt wird.

Die Bohrung 29 durchsetzt im Bereich zwischen dem Leitungsstück 26 und dem Rückschlagventil 31 eine parallel zur Bypass-Leitung 22 verlaufende Bohrung 34, deren eines Ende sich erweitert und in diesem Bereich von einem schneidenförmigen Rand 35 umgeben ist. Dieser bildet den Ventilsitz eines Schließventils 36 aus. Auf diesem Ventilsitz liegt ein plattenförmiger Ventilkörper 37 auf, der über eine Führungsstange 38 mit einer Stützplatte 39 verbunden ist. Auf dieser stützt sich eine Schraubenfeder 40 ab, deren anderes Ende an der Innenseite eines Drehknopfes 41 anliegt, der unterschiedlich tief in den Verteiler 1 einschraubbar ist, so daß die Andruckkraft der Schraubenfeder 40 an der Stützplatte 39 und damit die Anlagekraft des Ventilkörpers 37 an dem schneidenförmigen Rand 35 einstellbar sind.

Der schneidenförmigen Rand 35 wird an der Außenseite von einem Ringkanal 42 umgeben, der in aus der Zeichnung nicht ersichtlicherweise mit einer zu einem Brenner führenden Brennstoffleitung in Verbindung steht. Wenn der Ventilkörper 37 an dem schneidenförmigen Rand 35 anliegt, wie dies in der Figur dargestellt ist, besteht keine Verbindung zwischen der durch das Leitungsstück 26 gebildeten Brennstoffzuleitung und dem Brenner, wenn dagegen der Ventilkörper 37 vom Rand 35 gegen die Wirkung der Schraubenfeder 40 abgehoben ist, ergibt sich eine solche Verbindung.

In der Verlängerung der Bohrung 29 ist eine sich stufenförmig erweiternde Durchgangsbohrung 43 im Verteiler 1 angeordnet, die einerseits die Bypass-Leitung 22 und andererseits die Druckleitung 3 durchsetzt und die unterhalb der Druckleitung mittels eines in eine Gewindebohrung 44 des Verteilers 1 abgedichtet eingeschraubten Stopfens 45 verschlossen ist. In einer zylindrischen Ausnehmung 46 des Stopfens 45 ist ein topfförmiger Temperaturfühler 47 angeordnet, der die Druckleitung 3 durchsetzt und auf der dem Stopfen 45 gegenüberliegenden Seite die Durchgangsbohrung 43 mittels einer in eine Umfangsnut 48 eingelegten Ringdichtung 49 dicht verschließt. Der Außenumfang des Temperaturfühlers 47 ist kleiner als der Innendurchmesser der Ausnehmung 46, so daß der Ringraum 50 zwischen dem Temperaturfühler 47 und dem Stopfen 45 mit der Druckleitung 3 in Verbindung steht und somit von der durch die Druckleitung geförderten Flüssigkeit ausgefüllt wird.

Der Temperaturfühler 47 weist an seinem oberen Ende einen Stößel 51 auf, der je nach der Temperatur des Temperaturfühlers mehr oder weniger weit aus dem Temperaturfühler 47 herausgeschoben wird. Dieser Stößel 51 ragt in einen Verlängerungskolben 52 hinein, der seinerseits abgedichtet in den Teil der Durchgangsbohrung 43 eintritt, der sich unmittelbar an die Bypass-Leitung 22 anschließt. In diesem Bereich trägt der Verlängerungskolben 52 an seiner Stirnseite einen fingerförmigen Vorsprung 53, der beim Vorschieben des Verlängerungskolbens 52 in Richtung auf das Leitungsstück 26 am Ventilkörper 32 des Rückschlagventils 31 zur Anlage gelangen und diesen Ventilkörper 32 gegen die Kraft der Schraubenfeder 33 von der Verengung 30 abheben kann. Eine solche Verschiebung des Verlängerungskolbens 52 wird durch den Stößel 51 bei dessen Ausfahren aus dem Temperaturfühler 47 hervorgerufen, und zwar gegen die Kraft einer Schraubenfeder 54, die den Verlängerungskolben 52 konzentrisch umgibt und sich einerseits an einem Ringflansch 55 desselben und andererseits an einer stufenförmigen Verengung 56 der Durchgangsbohrung 43 abstützt.

Außerhalb des Vorsprungs 6 setzt sich die Durchgangsbohrung 7 im Verteiler sich stufenförmig verengend weiter fort und durchsetzt dabei zunächst die Bypass-Leitung 22 und gelangt schließlich in die verlängerte, sich parallel zur Bypass-Leitung 22 erstreckende Bohrung 34.

Zwischen der Bypass-Leitung 22 und der Bohrung 34 verengt sich die Durchgangsbohrung 7 stufenförmig, die Verengung 57 bildet einen ringförmigen Ventilsitz, an dem ein an der Spitze der Kolbenstange 18 gehaltener Ventilkörper 58 mit seiner konvex ausgebildeten Stirnfläche 59 dichtend anlegbar ist. Der Bereich der Durchgangsbohrung 7, der den Ventilkörper 58 aufnimmt, bildet somit ein Ventilgehäuse, dessen Außendurchmesser geringfügig größer ist als der Außendurchmesser des Ventilkörpers 58. Unterhalb des Ventilkörpers 58 trägt die Kolbenstange 18 in einer Umfangsnut 60 eine Ringdichtung 61, die die Durchgangsbohrung 7 auf der der Verengung 57 gegenüberliegenden Seite der Bypass-Leitung 22 abdichtet.

Der Ventilkörper 58 bildet zusammen mit der den Ventilsitz bildenden Verengung 57 ein Dosierventil 62, mit dem eine Verbindung zwischen der Bypass-Leitung 22 einerseits und der parallel dazu verlaufenden Bohrung 34 wahlweise mehr oder weniger verschließbar ist, und zwar abhängig von der Verschiebung des Steuerkolbens 11 im Gehäuse 10.

Unmittelbar neben der Durchgangsbohrung 7 zweigt von der Bypass-Leitung 22 eine parallel zur Durchgangsbohrung 7 verlaufende, sich stufenförmig erweiternde Bohrung 63 ab, die von einer ringförmigen Schneide 64 umgeben wird. Auf dieser liegt ein plattenförmiger Ventilkörper 65 auf, der über eine Führungsstange 66 mit einer Stützplatte 67 verbunden ist. Auf dieser ruht eine konzentrisch dazu angeordnete Schraubenfeder 68, deren anderes Ende an der Innenseite eines Drehknopfes 69 anliegt, der mehr oder weniger tief in eine Gewindebohrung 70 der Bohrung 63 einschraubbar ist. Durch unterschiedlich tiefes Einschrauben des Drehknopfes 69 kann die Federvorspannung verändert werden, mit der der Ventilkörper 65 gegen die Schneide 64 gedrückt wird.

Die Schneide 64 wird von einem Ringkanal 71 umgeben, in den das Ende der Bohrung 34 einmündet, so daß bei von der Schneide 64 abgehobenem Ventilkörper 65 über den Ringkanal 71 und die Bohrung 63 eine Verbindung zur Bypass-Leitung 22 hergestellt wird.

In dem Verteiler werden zwei vollständig getrennte Flüssigkeitssysteme geführt, nämlich im Bereich der Druckleitung 3 und der davon abzweigenden Bohrungen eine von der Hochdruckpumpe geförderte Reinigungsflüssigkeit, beispielsweise Wasser, in dem Leitungsstück 26, der Bypass-Leitung 22, der parallelen Bohrung 34 und in allen davon abzweigenden Bohrungen dagegen fossiler Brennstoff zur Versorgung eines Brenners. Die beiden Flüssigkeitssysteme sind im Verteiler unmittelbar nebeneinander angeordnet, sie werden aber gegeneinander abgedichtet, und zwar im Bereich der Durchgangsbohrung 7 durch die Dichtungen 19 und 61 und im Bereich der Durchgangsbohrung 43 durch die Ringdichtung 49 und die im Verlängerungskolben 52 angeordnete Ringdichtung.

Bei normalem Reinigungsbetrieb fließt Reinigungsflüssigkeit von der Hochdruckpumpe durch die Druckleitung zu einer Sprühlanze oder dergleichen. Dadurch wird im Bereich der Drosselstelle 4 ein Unterdruck erzeugt, der zu einer Druckdifferenz am Steuerkolben 11 führt. Dieser wird aufgrund dieser Druckdifferenz entgegen der Wirkung der Schraubenfeder 21 so verschoben, daß das Dosierventil 62 geschlossen wird, daß also der Ventilkörper 58 mit seiner Stirnfläche 59 dichtend an der Verengung 57 anliegt. Bei dieser Betriebsart ist die Bohrung 34, die mit dem den Brennstoff zuführenden Leitungsstück 26 in Verbindung steht, von der Bypass-Leitung 22 abgetrennt, denn im normalen Betrieb ist auch das Rückschlagventil 31 geschlossen, außerdem ist üblicherweise auch der Ventilkörper 65 gegen die Schneide 64 gedrückt, so daß das durch diese Teile gebildete Über- strömventil geschlossen ist. Der durch das Leitungsstück 26 herangeführte Brennstoff kann damit aufgrund des Drucks der Brennstoffpumpe das Schließventil 36 öffnen und in den Ringkanal 43 eintreten, so daß der Brennstoff zum Brenner gelangen kann. Der Brenner kann in einem nicht dargestellten Durchlauferhitzer die durch die Druckleitung 3 strömende Reinigungsflüssigkeit aufheizen.

Nimmt die Strömung der Reinigungsflüssigkeit durch die Druckleitung 3 ab, sei es durch eine Querschnittsverengung am Auslaß der Druckleitung, sei es durch zu geringe Nachführung von der Hochdruckpumpe her, so ergibt sich im Bereich der Drosselstelle 4 eine geringere Druckabsenkung als im Normalbetrieb. Die am Steuerkolben 11 sich ausbildende Druckdifferenz sinkt dadurch, dies führt zu einer Verschiebung des Steuerkolbens 11 in Richtung der Wirkung der Schraubenfeder 21. Bereits bei einer geringen Verschiebung hebt sich der Ventilkörper 58 von der Verengung 57 ab und gibt in diesem Bereich einen ringförmigen Durchgangsspalt frei, durch den ein Teil des über das Leitungsstück 26 angelieferten Brennstoffs in die Bypass-Leitung 22 gelangen kann, von der er zum Brennstoffvorrat zurückgeführt wird. Dadurch sinkt der am Schließventil 36 anstehende Druck des Brennstoffs, die dem Brenner zugeführte Brennstoffmenge nimmt also ab. Wird der Effekt verstärkt, kann dies auch dazu führen, daß der zur Öffnung des Schließventils 36 notwendige Brennstoffdruck nicht mehr vorhanden ist, dieses schließt dann unter der Wirkung der Schraubenfeder 40, so daß der Brenner erlischt. Der gesamte durch das Leitungsstück 26 angelieferte Brennstoff wird dann durch die Bypass-Leitung 22 dem Brennstoffvorrat wieder zugeführt.

Der Brenner kann erst dann wieder mit Brennstoff versorgt werden, wenn der Durchfluß durch die Druckleitung 3 so weit erhöht wird, daß durch den Steuerkolben 11 eine zumindest weitgehende Schließung der Verbindung zwischen Bohrung 34 und Bypass-Leitung 22 eintritt.

Der minimale Betriebsdruck des Brennstoffs, der dem Brenner zugeführt wird, läßt sich durch den Drehknopf 41 einstellen, so daß der Öffnungsdruck den optimalen Betriebsdaten des Brenners angepaßt werden kann.

Der Temperaturfühler 47 ermöglicht eine Abschaltung des Brenners, wenn die durch die Druckleitung 3 geführte Reinigungsflüssigkeit eine zu hohe Temperatur erreicht. Beim Anstieg der Temperatur fährt aus dem Temperaturfühler 47 der Stößel 51 aus, und zwar ist der Ausfahrweg um so größer, je höher die Temperatur der umgebenden Flüssigkeit wird. Erreicht die Temperatur einen oberen Grenzwert, so öffnet der fingerförmige Vorsprung 53 das Rückschlagventil 31 und stellt dadurch eine Verbindung zwischen dem Leitungsstück 26 einerseits und der Bypass-Leitung 22 andererseits her, durch die der Brennstoff zum Brennstoffvorrat zurückgelangt. Dies führt zu einem Druckabfall des Brennstoffs und in der beschriebenen Weise zu einer Unterbrechung der Brennstoffzufuhr zum Brenner.

Sobald die Temperatur der Reinigungsflüssigkeit in der Druckleitung wieder unterhalb des kritischen Temperaturwerts liegt, wird das Rückschlagventil 31 erneut verschlossen, so daß der Brenner wieder in der gewohnten Weise mit Brennstoff versorgt werden kann. Der Temperaturfühler 47 wirkt also als Übertemperatursicherung.

Wenn der Brennstoffdruck im Leitungsstück 26 einen oberen Grenzwert überschreitet, führt dies zu einer Öffnung des durch den Ventilkörper 65 und die Schneide 64 gebildeten Überströmventils, so daß auch auf diese Weise eine Verbindung zwischen der Bohrung 34 und der Bypass-Leitung 22 hergestellt wird. Damit wirkt dieses Ventil als Druckbegrenzungsventil im Brennstoffsystem, wobei selbstverständlich mit Hilfe des Drehknopfes 69 dieser obere Druckwert so eingestellt werden muß, daß er oberhalb des normalen Brennerbetriebsdrucks liegt.

Auf engstem Raum gelingt es mit dem beschriebenen Verteiler nicht nur, abhängig von der durchströmenden Reinigungsflüssigkeitsmenge die Brennstoffzufuhr zum Brenner zu steuern, sondern es werden außerdem eine Sicherung gegen Übertemperaturen im Reinigungsflüssigkeitssystem und gegen Überdruckwerte im Brennstoffsystem geschaffen.

## Patentansprüche

1. Hochdruckreinigungsgerät mit einer eine Reinigungsflüssigkeit aus einer Saugleitung in eine Druckleitung pumpenden Hochdruckpumpe, mit einer Drosselstelle in der Druckleitung, an der ein strömungsabhängiger Druckabfall auftritt, mit einem in einem Gehäuse abgedichtet verschiebbaren Steuerkolben, der dieses in zwei Kammern unterteilt, von denen eine mit der Druckleitung stromaufwärts der Drosselstelle verbunden ist und die andere mit der Druckleitung an der Drosselstelle oder stromabwärts derselben, mit einem Ventil, das durch die Bewegung des Steuerkolbens geöffnet oder geschlossen wird, und mit einer Heizung für die über die Druckleitung abgegebene Flüssigkeit,
dadurch gekennzeichnet, daß
das Ventil ein Dosierventil (62) ist, welches eine zu einem Brenner der Heizung führende Zufuhrleitung (26) für einen fossilen Brennstoff mit einer von der Zufuhrleitung (26) zum Brennstoffvorrat zurückführenden Bypass-Leitung (22) verbindet und die Verbindung verschließt, wenn aufgrund einer Strömung in der Druckleitung (3) eine große Durckdifferenz an der Drosselstelle (4) entsteht, sie jedoch bei fallender Druckdifferenz an der Drosselstelle (4) aufgrund abnehmender Strömung in der Druckleitung (3) zunehmend freigibt.

2. Hochdruckreinigungsgerät nach Anspruch 1, dadurch gekennzeichnet, daß der Steuerkolben (11) abgedichtet aus dem Gehäuse (10) austritt und außerhalb des Gehäuses (10) einen Ventilkörper (58) trägt, der abgedichtet in ein Ventilgehäuse eintritt, in das die Zufuhrleitung (46, 34) einmündet und aus dem die Bypass-Leitung (22) austritt.

3. Hochdruckreinigungsgerät nach Anspruch 1 oder 2, dadurch gekennzeichnet, daß sich die Zufuhrleitung stufenförmig erweitert und an ihrer Erweiterungsstufe (57) einen Ventilsitz ausbildet, gegen den der Ventilkörper (58) des Dosierventils (62) dichtend anlegbar beziehungsweise von dem der Ventilkörper (58) einen Ringspalt unterschiedlicher Breite ausbildend abhebbar ist.

4. Hochdruckreinigungsgerät nach einem der voranstehenden Ansprüche, dadurch gekennzeichnet, daß der Steuerkolben (11) mittels einer Feder (21) in Richtung auf die Öffnungsstellung des Dosierventils (62) vorgespannt ist.

5. Hochdruckreinigungsgerät nach einem der voranstehenden Ansprüche, dadurch gekennzeichnet, daß die Drosselstelle (4) durch eine Querschnittsverengung in der Druckleitung (3) gebildet ist und im Bereich der Drosselstelle (4) eine Verbindungsleitung (16) zu der anderen Kammer (15) des den Steuerkolben (11) aufnehmenden Gehäuses (10) abzweigt.

6. Hochdruckreinigungsgerät nach einem der Ansprüche 1 bis 4, dadurch gekennzeichnet, daß die Drosselstelle (4) durch einen die Heizung durchsetzenden Teil der Druckleitung gebildet wird und stromabwärts der Heizung eine Verbindungsleitung zu der anderen Kammer des den Steuerkolben aufnehmenden Gehäuses abzweigt.

7. Hochdruckreinigungsgerät nach einem der voranstehenden Ansprüche, dadurch gekennzeichnet, daß in der Druckleitung (3) stromabwärts der Heizung ein temperaturabhängig verschiebbarer Fühler (47) angeordnet ist, der beim Überschreiten einer oberen Grenztemperatur ein Schließventil (31) zwischen der Zufuhrleitung (26, 29) für den fossilen Brennstoff und der Bypass-Leitung (22) öffnet.

8. Hochdruckreinigungsvorrichtung nach Anspruch 7, dadurch gekennzeichnet, daß das Schließventil (31) als federbelastetes Rückschlagventil ausgebildet ist und daß der Fühler (47) das Ventil entgegen der Wirkung der Feder (33) mechanisch verschiebt.

9. Hochdruckreinigungsvorrichtung nach einem der voranstehenden Ansprüche, dadurch gekennzeichnet, daß zwischen der Zufuhrleitung (26, 34) für den fossilen Brennstoff und der Bypass-Leitung (22) ein Ventil (64, 65) angeordnet ist, welches beim Überschreiten eines bestimmten oberen Grenzdruckes öffnet, darunter jedoch verschlossen ist.

10. Hochdruckreinigungsvorrichtung nach einem der voranstehenden Ansprüche, dadurch gekennzeichnet, daß in der Verbindungsleitung (34) zwischen der Zufuhrleitung (26) für den fossilen Brennstoff und dem Brenner ein federbelastetes Schließventil (36) angeordnet ist, welches erst beim Überschreiten eines Mindestdrucks in der Zufuhrleitung öffnet und bei niedrigeren Druckwerten geschlossen ist.

11. Hochdruckreinigungsgerät nach Anspruch 10, dadurch gekennzeichnet, daß die Federvorspannung des Schließventils (36) einstellbar ist.
